# EUROPÄISCHE PATENTSCHRIFT

(11) **EP 0 691 461 B1**
(45) Veröffentlichungstag und Bekanntmachung des Hinweises auf die Patenterteilung: **25.03.1998**
(21) Anmeldenummer: 95109789.8
(22) Anmeldetag: 23.06.1995
(51) Int. Cl.: F02B 27/02

(54) **Ansauganlage für eine Mehrzylinder-Brennkraftmaschine**
Induction system for a multi-cylinder combustion engine
Système d'admission pour un moteur à combustion à plusieurs cylindres

(30) Priorität: 05.07.1994 DE 4423427
(43) Veröffentlichungstag der Anmeldung: 10.01.1996
(73) Patentinhaber: FILTERWERK MANN & HUMMEL GMBH, 71631 Ludwigsburg (DE)
(72) Erfinder: Adamek, Peter, D-70195 Stuttgart (DE); Kopec, Eduard, D-74321 Bietigheim-Bissingen (DE); Ludmann, Armin, D-70839 Gerlingen (DE)
(74) Vertreter: Voth, Gerhard, Dipl.-Ing.

(56) Entgegenhaltungen:
- EP-A- 0 177 794
- EP-A- 0 215 628
- EP-A- 0 355 960
- WO-A-94/04803
- DE-A- 3 807 193
- DE-A- 4 018 612
- DE-A- 4 040 598
- FR-A- 2 682 431
- US-A- 4 779 600

## Beschreibung

Die Erfindung betrifft eine Ansauganlage für eine Mehrzylinder-Brennkraftmaschine nach dem Oberbegriff des Hauptanspruchs.

Aus der DE 40 40 598 ist eine Saugrohranlage bekannt. Diese weist pro Zylinder erste und zweite Saugrohre unterschiedlicher Länge auf, die jeweils von einem ersten bzw. von einem zweiten Ansaugverteiler ausgehen.

Eine Ansaugleitung mit Drosselklappe mündet in den ersten Ansaugverteiler, dieser steht mit dem zweiten Ansaugverteiler durch eine Leitung in Verbindung.

In dem zweiten Ansaugverteiler ist eine Drehblende mit einer teilkreisförmig gekrümmten Wand angeordnet, die mit einer entsprechend gekrümmten Wand des Ansaugverteiler zusammenwirkt. Durch Schalten der Drehblende läßt sich der zweite Ansaugverteiler aktivieren bzw. sperren.

Bei einer solchen Einrichtung sollte eine gute Abdichtung zwischen den einzelnen Ansaugrohren erzielt werden. Dies bedeutet, daß bei der Fertigung der einzelnen Elemente eine sehr hohe Paßgenauigkeit erforderlich ist. Sofern die Ansauganlage aus Kunststoff besteht, ist die hohe Paßgenauigkeit nur mit einem verhältnismäßig hohen Fertigungsaufwand zu realisieren.

Es ist ferner aus der DE 40 18 612 A1 ein Ansaugsystem für eine Merzylinder Brennkraftmaschine bekannt. Dieses weist für jeden Zylinder zwei Saugrohre auf, die sich vor der Einlaßöffnung des Zylinders vereinigen und von denen das erste Saugrohr in allen Betriebszuständen eingeschaltet ist und das zweite Saugrohr in Abhängigkeit von Betriebsparametern durch einen Walzendrehschieber zugeschaltet wird. Ein Nachteil dieser Anordnung besteht darin, daß die einzelnen Saugrohre einen hohen Platzbedarf erfordern, dies führt zu einem unverhältnismäßig hohen Aufwand im Bereich des Ansaugtraktes einer Brennkraftmaschine.

Es ist weiterhin eine Saugrohranlage dieser Art in der EP-B 177 794 beschrieben. Hier sind die einelnen Saugrohre mit einem Sammelsaugrohr zu einer Einheit zusammengefasst, an die als eigenes Bauteil der Ansaugverteiler angeflanscht ist. Dieser steht einerseits über ein Drosselklappenventil mit dem Sammelsaugrohr und andererseits mit den Einzelsaugrohren in Verbindung. Die zweiten Einzelsaugrohre können durch Klappen die auf Wellen angeordnet sind abgesperrt oder freigegeben werden. Diese bekannte Saugrohranlage ist in der Herstellung verhältnismäßig aufwendig und bereitet Probleme in bezug auf ein einwandfreies Zusammenwirken der im Ansaugverteiler gelagerten Schwenkklappen mit den in einem anderen Bauteil angeordneten zweiten Einzelsaugrohren.

Aufgabe der Erfindung ist es, eine Ansauganlage der gattungsgemäßen Art zu schaffen, die funktionssicher gestaltet ist und sich durch eine entsprechend kostengünstige Herstellung auszeichnet. Diese Aufgabe wird erfindungsgemäß durch die Merkmale des Anspruchs 1 gelöst.

Der wesentliche Vorteil der Erfindung ist darin zu sehen, daß die Schaltwelle, welche die gesamte Ansauganlage durchdringt, eine sogenannte fliegende Schaltwelle ist, das heißt, diese ist radial frei beweglich in der entsprechenden Öffnung der Ansauganlage angeordnet. Damit wird ein Verkanten oder Verklemmen der Schaltwelle wirksam verhindert.

Eine vorteilhafte Ausgestaltung der Erfindung sieht vor, zur axialen Fixierung der Schaltwelle ein axial definiertes Lager, insbesondere ein Spitzenlager, anzuwenden. Dieses ist an der endseitigen Stirnseite der Schaltwelle angeordnet. Am gegenüberliegenden Ende stützt sich die Schaltwelle über eine Druckfeder ab. Zweckmäßigerweise wird zur Verringerung der Reibungskräfte des Spitzenlagers eine Teflonplatte eingesetzt. Selbstverständlich besteht auch die Möglichkeit, andere reibungsarme Werkstoffe für dieses Lager zu verwenden.

Zur spannungsfreien Übertragung einer Drehbewegung, ist gemäß einer weiteren Ausgestaltung der Erfindung an einer Stirnseite der Schaltwelle eine Klauenkupplung angeordnet. Diese weist eine radiale Beweglichkeit auf. Der Drehteller ist damit ebenfalls entkoppelt und überträgt lediglich die entsprechende Drehbewegung.

Zur Abdichtung zwischen den Einzelsaugrohren ist gemäß einer Ausgestaltung der Erfindung die Schaltwelle jeweils zwischen zwei benachbarten Durchbrüchen mit einer Umfangsnut versehen in welche ein außenspannender Kolbenring (Dichtring) eingesetzt werden kann. Dieser Kolbenring liegt dichtend an der Wand der Aufnahmebohrung für die Schaltwelle an. Das Einsetzen der Schaltwelle mit den Dichtringen kann mit Hilfe einer Montagehülse erfolgen, wie dies prinzipiell bei der Montage mit Kolbenringen bestückten Kolben üblich ist. Durch diese Dichtringe wird einerseits eine zuverlässige Abdichtung zwischen den einzelnen Saugrohren erzielt. Andererseits werden Toleranzen zwischen Schaltwelle und Bohrung wirksam ausgeglichen.

Die Ansauganlage besteht vorzugsweise aus Kunststoff und aufgrund ihrer komplizierten Struktur aus einem Kunststoffteil das in Schmelzkerntechnik hergestellt ist. Die Schaltwelle kann aus einem Kunststoffspritzgußteil gefertigt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung sind in den Zeichnungen dargestellt und werden im folgenden näher erläutert.

Die Zeichnungen zeigen:
- Figur 1: einen Querschnitt durch eine Ansauganlage,
- Figur 2: einen Schnitt durch eine in der Ansauganlage angeordneten Schaltwelle,
- Figur 3: eine Detaildarstellung eines Axiallagers.

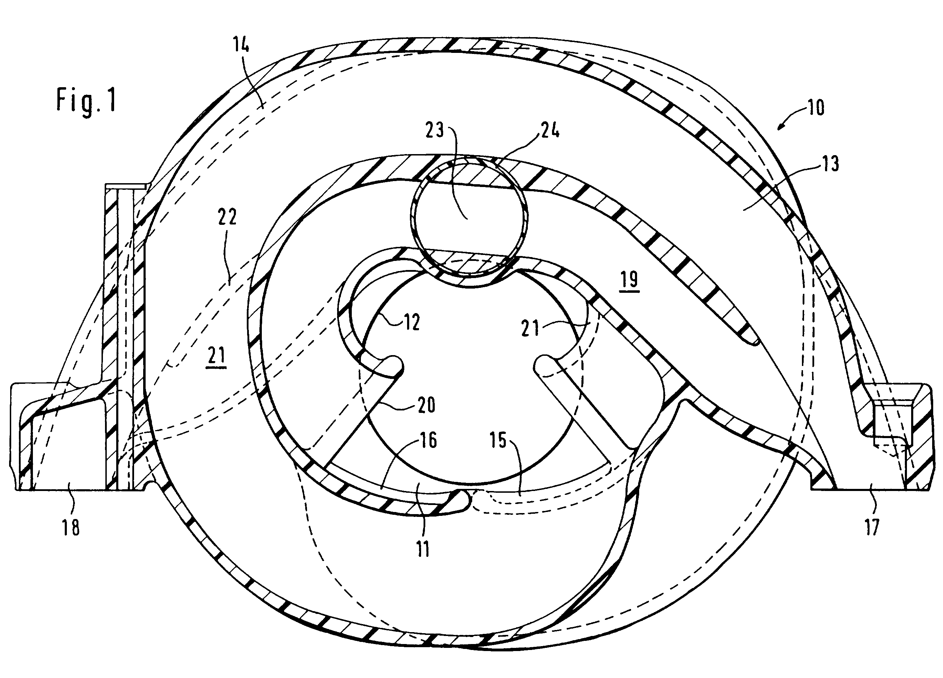

Die in Figur 1 gezeigte Ansauganlage ist für eine Brennkraftmaschine in V-förmiger Bauart zur Anordnung zwischen den Zylinderreihen bestimmt. Sie besteht aus einem einstückigen Kunststoffbauteil 10, das beispielsweise in Kernschmelztechnik hergestellt ist. In diesem Kunststoffbauteil 10 ist ein zentraler, rohrförmiger Ansaugverteiler 11 enthalten der durch eine Öffnung 12 in einer Außenwand des Kunststoffbauteils 10 mit einem nicht dargestellten Drosselklappenteil verbunden ist. Von dem Ansaugverteiler 11 gehen abwechselnd erste Einzelsaugrohre 13 für die Zylinder der rechten Zylinderreihe und weitere Einzelsaugrohre 14 (gestrichelt dargestellt) für die Zylinder der zweiten, linksseitig angeordneten Zylinderreihe aus. Die ersten Einzelsaugrohre 13 sind nebeneinander angeordnet und erstrecken sich, wie aus der Figur 1 ersichtlich, um den Ansaugverteiler 11 herum, wobei die ersten Einzelsaugrohre 13 in Figur 1 im Uhrzeigersinn und die ersten Einzelsaugrohre 14 entgegen dem Uhrzeigersinn verlaufen. Die Eintrittsöffnungen der ersten Einzelsaugrohre ist im Bereich 15, die Eintrittsöffnung der zweiten Einzelsaugrohre ist Bereich 16 angeordnet. Die Einzelsaugrohre enden jeweils in einem Flansch 17, 18, der an den Zylinderkopf der jeweiligen Zylinderreihe angebracht wird. Mit einer geeigneten Schraubverbindung wird über den jeweiligen Flansch die Ansauganlage mit dem Motor verbunden. Radial innerhalb jedes ersten Einzelsaugrohres 13 ist ein kurzes, zweites Einzelsaugrohr 19 angeordnet, welches ebenfalls von dem Ansaugverteiler 11 versorgt wird. Die Eintrittsöffnung 20 verbindet dieses Einzelsaugrohr mit dem Ansaugverteiler 11. Die zweiten Einzelsaugrohre 21 verlaufen parallel zu den zugehörigen ersten Einzelsaugrohren und in gleicher Richtung wie diese und haben mit diesen eine gemeinsame Wand 22. Zum Absperren oder Öffnen der kurzen Einzelsaugrohre 19, 21 ist eine Schaltwelle 23 vorgesehen. Diese ist innerhalb des Kunststoffbauteils in einer, die zweiten Einzelsaugrohre 19, 21 schneidenden Längsbohrung 24 angeordnet. In der gezeigten Stellung sind die zweiten Einzelsaugrohre 19, 21 zusätzlich zu den ersten Einzelsaugrohren 13, 14 geöffnet. Diese Stellung bewirkt bei Vollast des Motors unterhalb einer bestimmten Grenzdrehzahl ein höheres Drehmoment. Die Grenzdrehzahl liegt beispielsweise bei 4300 Umdrehungen. Die Schaltwelle 23 wird von einem hier nicht dargestellten Stellglied in die jeweilige Stellung gedreht.

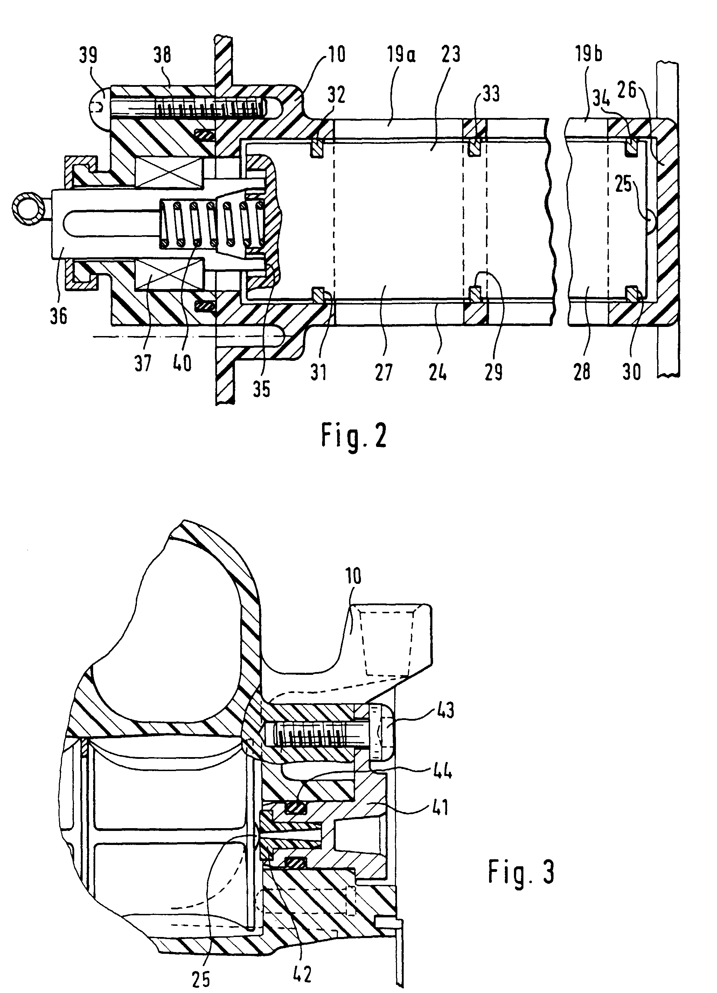

In Figur 2 ist die Schaltwelle 23 in einer Querschnittsdarstellung gezeigt. Das Kunststoffbauteil 10 der Ansauganlage ist hier nur ausschnittsweise dargestellt. Die Schaltwelle 23 ist in einer Längsbohrung 24 des Kunststoffbauteiles eingeschoben. Am rechtsseitigen Ende stützt sich die Schaltwelle 23 über einen Noppen 25 an der Abschlußwand 26 des Kunststoffbauteiles ab. In der hier gezeigten Stellung verbinden die Durchgangsöffnungen 27, 28 die parallel liegenden Einzelsaugrohre 19a, 19b. Zwischen den Einzelsaugrohren ist die Schaltwelle 23 mit Nuten 29, 30, 31 versehen. In diesen Nuten befindet sich jeweils ein Dichtring der nach Art eines Kolbenringes aufgebaut ist und sich an die Wandung der Längsbohrung 24 anlegt. An der linken Stirnseite ist die Schaltwelle über eine Klauenkupplung 35 mit einem Koppelelement 36 verbunden. Das Kopppelelement 36 ist über ein Kugellager 37 an einem Anschlußflansch 38 drehbar fixiert. Der Anschlußflansch kann, wie hier dargestellt, unmittelbar an dem Kunststoffbauteil 10 über Schraubverbindungen 39 befestigt werden. Das Koppelelement 36 wird durch ein hier nicht dargestelltes Stellglied gedreht wobei die Drehbewegung näherungsweise 90 ° beträgt. Damit wird die Möglichkeit geschaffen, mittels der Schaltwelle die Einzelsaugrohre 19a, 19b zu verschließen. Über eine Druckfeder 40, die sich einerseits an dem Koppelelement 36, andererseits an der Schaltwelle abstützt, wird eine Axialkraft auf die Schaltwelle ausgeübt, die gewährleistet, daß die Schaltwelle in der dargestellten Stellung verbleibt.

Figur 3 zeigt in einer Detaildarstellung die rechtsseitige Abstützung der Schaltwelle an dem Kunststoffbauteil 10. Die Schaltwelle trägt, wie bereits in Figur 2 dargestellt, einen mittig angeordneten Noppen 25. An dem Kunststoffbauteil 10 ist ein Stützelement 41 angeordnet. In diesem Stützelement befindet sich eine Lagerplatte 42. Diese Lagerplatte besteht beispielsweise aus PTFE, so daß in Verbindung mit der Kunststoffschaltwelle ein Axiallager geschaffen wird, das einen sehr niedrigen Reibungskofizienten aufweist. Das Stützelement 41 ist mit dem Kunststoffbauteil 10 über eine Schraubverbindung mittels Schrauben 43 verbunden. Das Stützelement 41 ist mit einem Dichtelement 44 versehen, welches den Eintritt von Leckluft in den Ansaugtrakt des Motors verhindert.

## Patentansprüche

1. Ansaugeinlage für eine mehrzylinder Brennkraftmaschine, die pro Zylinder wenigstens erste und zweite Saugrohre (13,14 bzw 19,21) unterschiedlicher Länge aufweist, welche kurz vor dem Einlaßventil zusammengeführt sind und von denen das kürzere zweite Saugrohr (19,21) mit einem Absperrorgan versehen ist, welches eine Schaltwelle (23) ist, die sich über die gesamte Länge der nebeneinanderliegenden zweiten Einzelsaugrohre (19,21) erstreckt, dadurch gekennzeichnet, daß die Saugrohre (13,14,19,21) von einem Ansaugverteiler (11) ausgehen und daß die Schaltwelle (23) wenigstens an einem Ende radial freibeweglich gelagert ist.

2. Ansauganlage nach Anspruch 1, dadurch gekennzeichnet, daß die Schaltwelle (23) an wenigstens einem Ende ein axial definiertes Lager, insbesondere ein Spitzenlager (25, 42) aufweist.

3. Ansauganlage nach Anspruch 1, dadurch gekennzeichnet, daß die Schaltwelle (23) an wenigstens einem Ende ein Gleitlager aufweist.

4. Ansauganlage nach Anspruch 1 oder 2, dadurch gekennzeichnet, daß die Einleitung von Stellbewegungen auf die Schaltwelle mittels einer radialbeweglich gekoppelten Klauenkupplung (35) erfolt.

5. Ansauganlage nach einem der vorherigen Ansprüche, dadurch gekennzeichnet, daß die Schaltwelle (23) zwischen den Öffnungen der Einzelsaugrohre kolbenringartige Dichtelemente (32, 33, 34) aufweist.

6. Ansauganlage nach einem der vorherigen Ansprüche, dadurch gekennzeichnet, daß der Ansaugverteiler (11) und die Schaltwelle (23) aus Kunststoff hergestellt sind, wobei der Ansaugverteiler (11) insbesondere mittels Schmelzkerntechnik hergestellt ist und die Schaltwelle (23) ein Kunststoffspritzgußteil ist.

7. Ansauganlage nach Anspruch 2, dadurch gekennzeichnet, daß das Spitzenlager mit einer PTFE-Lagerplatte (42) versehen ist und auf der gegenüberliegenden Seite der Schaltwelle (23) eine Druckfeder (40) zur Erzeugung einer axialgerichteten Federkraft auf die Schaltwelle vorgesehen ist, welche die Schaltwelle (23) in der vorgegebenen Axiallage definiert.

## Claims

1. Intake system developed for a multi-cylinder internal combustion engine, with each cylinder having at least first and second intake pipes (13, 14 and 19, 21 respectively) of different length which are joined together shortly in front of the inlet valve and the second shorter intake pipes (19, 21) of the same are equipped with a shut-off mechanism which is developed as a selector shaft (23), whereby said selector shaft extends over the entire length of the independent second intake pipes (19, 21) lying next to each other, characterized in that the intake pipes (13, 14 and 19, 21) start from an intake distributor (11) and that at least one end of the selector shaft (23) is freely supported in radial direction.

2. Intake system according to claim 1, characterized in that the selector shaft (23) is provided with an axially defined bearing, in particular a toe bearing (25, 42), at least at one of its ends.

3. Intake system according to claim 1, characterized in that the selector shaft (23) is provided with a plain bearing at least at one of its ends.

4. Intake system according to claim 1 or 2, characterized in that a connected claw coupling (35) which is movable in radial direction is provided in order to start actuation on the selector shaft.

5. Intake system according to one of the preceding claims, characterized in that the selector shaft (23) is provided with sealing elements similar to piston rings (32, 33, 34) which are located between the openings of the single intake pipes.

6. Intake system according to one of the preceding claims, characterized in that the intake distributor (11) and the selector shaft (23) are manufactured from plastics material, with the intake distributor (11) particularly being manufactured with the core-melting / fusion process SCHMELZKERNTECHNIK and the selector shaft (23) being an injection-moulded plastics piece.

7. Intake system according to claim 2, characterized in that the toe bearing is provided with a bearing plate (42) of polytetrafluoroethylene (PTFE) and that a compression spring (40) is located at the opposite side of the selector shaft (23), in order to generate an axially directed spring force on the selector shaft, whereby said compression spring determines the given axial position of the selector shaft (23).

## Revendications

1. Système d'admission pour un moteur à combustion interne à plusieurs cylindres présentant pour chaque cylindre au moins un premier et un second tube d'admission (13, 14 ou 19, 21) de longueurs différentes, abouchés peu avant la soupape d'admission et dont le second tube d'admission le plus court (19, 21) est équipé d'un organe d'arrêt constitué d'un arbre de commutation (23) s'étendant sur toute la longueur occupée par les seconds tubes d'admission voisins (19, 21),
caractérisé en ce que
les tubes d'admission (13, 14, 19, 21) partent d'un distributeur d'admission (11), l'arbre de commutation (23) ayant une extrémité libre de se déplacer radialement.

2. Système d'admission selon la revendication 1,
caractérisé en ce que
l'arbre de manoeuvre (23) présente au moins à une extrémité un palier défini axialement, en particulier un palier à pivots (25, 42).

3. Système d'admission selon la revendication 1,
caractérisé en ce que
l'arbre de manoeuvre (23) présente au moins à une extrémité un palier de glissement.

4. Système d'admission selon la revendication 1 ou 2,
caractérisé en ce que
les mouvements de réglage de l'arbre de commutation sont produits par l'intermédiaire d'un accouplement à griffes à mobilité radiale.

5. Système d'admission selon l'une des revendications précédentes,
caractérisé en ce que
l'arbre de commutation (23) présente, entre les ouvertures des tubes d'admission individuels, des joints d'étanchéité du type segment de piston (32, 33, 34).

6. Système d'admission selon l'une des revendications précédentes,
caractérisé en ce que
le distributeur d'admission (11) et l'arbre de commutation (23) sont en plastique, le distributeur (11) étant en particulier fabriqué par la technique à noyau fondu, tandis que l'arbre de commutation est une pièce en matière plastique moulée par injection.

7. Système d'admission selon la revendication 2,
caractérisé en ce que
le palier à pivots est équipé d'une platine d'appui (42) en PTFE, un ressort de poussée (40) est prévu pour engendrer une force élastique en direction axiale sur l'arbre de commutation (23) dans la position axiale prédéterminée.
